(19) Europäisches Patentamt
European Patent Office
Office européen des brevets

(11) **EP 1 801 571 B1**

(12) **EUROPEAN PATENT SPECIFICATION**

(45) Date of publication and mention of the grant of the patent:
**20.04.2016 Bulletin 2016/16**

(21) Application number: **06126291.1**

(22) Date of filing: **18.12.2006**

(51) Int Cl.:
*G01N 23/203* (2006.01)       *G01B 15/02* (2006.01)
*G01N 9/24* (2006.01)

(54) **Apparatus for measuring the density of manufactured articles, particularly panels of pressed loose material, and associated method**

Vorrichtung zur Messung der Dichte von hergestellten Artikeln, insbesondere Platten aus gepresstem, losem Material und zugehöriges Verfahren

Appareil de mesure de densité d'articles fabriqués, en particulier des panneaux de matériaux en vrac compressés, et procédé associé

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.12.2005 IT MO20050341**

(43) Date of publication of application:
**27.06.2007 Bulletin 2007/26**

(73) Proprietor: **IMAL S.r.l**
**41010 San Damaso (MO) (IT)**

(72) Inventors:
• **Benedetti, Paolo**
**41010 MODENA - Frazione SAN DAMASO (IT)**
• **Fernandez, Jorge E.**
**40138 BOLOGNA (IT)**

(74) Representative: **Modiano, Micaela Nadia**
**Modiano & Partners**
**Via Meravigli, 16**
**20123 Milano (IT)**

(56) References cited:
**DE-A1- 4 309 828       DE-A1- 4 315 988**
**GB-A- 1 253 093       US-A1- 4 918 712**
**US-A1- 5 195 116       US-A1- 5 729 582**

• ZHU P ET AL: "X-ray Compton backscattering techniques for process tomography: imaging and characterization of materials" MEASUREMENT SCIENCE AND TECHNOLOGY, INSTITUTE OF PHYSICS PUBLISHING, BRISTOL, GB, vol. 7, no. 3, 1 March 1996 (1996-03-01), pages 281-286, XP020063979 ISSN: 0957-0233

## Description

The present invention relates to an apparatus for measuring the density of manufactured articles, particularly of panels made of pressed loose material, and to the associated method.

With particular reference to the wood industry, it is known to manufacture panels obtained by pressing loose wooden materials, such as fibers, shavings or chips.

These panels are commonly applied in the field of furniture and building and in the production of vehicles and watercraft.

It is also known that the panels thus provided can have defects, such as for example lack of uniformity caused by uneven pressing or by the accidental presence of air bubbles or cracks.

It is known to use, along the production lines of these panels, control stations which are adapted to check the quality of the parts in transit along said lines, such stations being arranged conventionally downstream of the continuous forming press and/or along the line for smoothing the formed panels.

These stations are provided with devices for detecting the density of the panels which utilize the different absorption, by the panels, of electromagnetic radiation (X-rays) or ultrasound at defects.

With particular reference to devices of the electromagnetic emission type, devices for detecting the density of the panel are known which are constituted by a unit for emitting a beam of electromagnetic waves, which is associated with a respective receiving unit; such units are arranged on opposite sides with respect to the plane formed by a line for moving the panels being processed.

The emitted stream of electromagnetic waves has a preset intensity, which, compared to the intensity of the stream detected by the receiving unit, allows to determine the absorption coefficient of the material, the density of the panel and any presence of production defects.

These known devices are not free from drawbacks, including the fact that the presence of an emitter unit and of a receiving unit which are mutually separate and arranged on opposite sides with respect to a line for moving the panels, increases considerably the operating complexity of the apparatus, requiring for example operations for tuning and mutually aligning the two units which are onerous in terms of time and in terms of use of qualified workforce.

If it is necessary to move the emitter and receiving units along a portion of the article production line, the presence is further required of separate motorized movement means, consequently increasing the overall costs of the apparatus and the risk of measurement errors caused by mechanical defects and errors in synchronization and alignment of the two units.

Another disadvantage consists of the necessary presence of cooling devices which are dedicated to the individual units, with an increase of the general production and maintenance costs of the apparatus.

Another drawback is caused by the arrangement of the emitter unit and/or receiving unit above the article movement line, with the risk of damaging the apparatus for example due to noxious gases produced by the method for manufacturing the articles.

Another disadvantage is that the stream of electromagnetic waves detected by the receiving unit, which depends on the thickness and type of material of the article, is not always sufficiently strong to provide an adequate measurement, making it difficult to determine correctly the absorption coefficient and the density of the article.

DE 43 15 988 A1 discloses an apparatus 1 comprising means for emitting a reference beam of X-rays of known intensity, means for detecting the intensity of a scattered beam of X-rays, generated by the scattering of said reference beam and a processing unit which is functionally associated with said detection means facing the same side of said advancement surface with respect to said emission means.

US-A1-4 918 712 discloses a device for delivering an indication about the mass per unit volume of the contents of an elementary volume, comprising a directional X radiation source and a directional photoelectronic photon detector, and wherein said source and/or said detector are mounted for rotation on a common support, about an axis orthogonal to the plane defined by the axis of the radiation beam emitted by said source and by the axis of the reception channel of said detector, and means are provided for moving said common support in a direction orthogonal to the axis of rotation of said source and/or of said detector.

US-A1-5 729 582 discloses an x-ray backscatter tomography system including a collimated x-ray source for directing an inclined collimated beam towards a target at a select position and orientation, a first detector array for measuring photons scattered at a selected first angle, and a second detector array for measuring photons scattered at a selected second angle different from the first angle. The system is also responsive to the first and second detectors for calculating the density and atomic number of the target.

The aim of the present invention is to eliminate the drawbacks cited above of the background art, by providing a method for measuring the density of manufactured articles, particularly panels made of pressed loose material, which allows to use an apparatus which is considerably simpler, less expensive, and easier to use and maintain.

Within this aim, an object of the present invention is to minimize the possibility of error during measurement of the density of the manufactured articles.

Another object of the invention is to ensure correct cooling of the transmitter and receiving units with relatively low structural and maintenance costs.

Another object of the present invention is to reduce the possibility of damage of the apparatus during its use.

A further object of the invention is to ensure a stream of received electromagnetic waves whose intensity is such as to ensure correct measurement of the density of the manufactured article.

In accordance with the invention, there is provided a measuring apparatus as defined in the appended claims 1-20, and a measuring method as defined in the appended claims 21-27.

Further characteristics and advantages of the present invention will become better apparent from the following detailed description of a preferred but not exclusive embodiment of an apparatus for measuring the density of manufactured articles, particularly panels made of pressed loose material, and of the corresponding method, illustrated by way of non-limiting example in the accompanying drawings, wherein:

Figure 1 is a schematic side view of the apparatus according to the invention;

Figures 2 and 3 are block diagrams which illustrate schematically the method for measuring density according to the present invention;

Figure 4 is a chart of the density profile of the manufactured article obtained with the apparatus and the method according to the invention.

With reference to the figures, the reference numeral 1 generally designates an apparatus for measuring the density of manufactured articles, particularly of panels made of pressed loose material.

Particularly but not exclusively, reference is made to the use of the apparatus 1 in the field of the production of panels 2 made of wood which are commonly used in furniture or building and are obtained by pressing wood fibers, chips or dust.

In a preferred embodiment, the apparatus 1 can be used at a conventional surface 3 for the rectilinear advancement of the panels 2, such as for example a motorized conveyor belt or alternately a sliding surface.

The apparatus 1 comprises means 4 for emitting a reference beam F of electromagnetic waves of known intensity, which are arranged on one side of an advancement surface 3 of the panels 2 and comprise a tube 5 for emitting a stream of X-rays, of a commonly used type, and a first device 6 for collimating said stream.

The reference beam F is formed along a direction D which is substantially transverse with respect to the advancement surface 3 and passes through the panel 2 at a series of sampling points which are formed at distinct depths along the thickness of said manufactured article, from a point $P_0$, formed on the outer surface of the manufactured article which faces the emission tube 5, to a point $P_N$ formed on the opposite outer surface.

In particular, the smaller angle formed between the direction D of the reference beam F and the advancement surface 3 is equal to $\pi/4$ rad. However, different arrangements of the emission tube 5 (and of the corresponding first collimator 6) with a different angle between the direction D and the advancement surface 3 are in any case not excluded.

The apparatus 1 comprises means 7 for detecting a scattered beam R of electromagnetic waves generated by the scattering of the reference beam F on the panel 2.

The detection means 7, which are constituted for example by a diode which is sensitive to X-rays or by a scintillator and by a second collimator 8 for the received scattered beam R, are arranged so as to face the panel 2 on the same side of the advancement surface 3 with respect to the emission means 4.

In particular, the scattering of the reference beam F on the panel generates a plurality of scattered beams R generated at each of the sampling points $P_0$ to $P_N$.

Advantageously, the apparatus 1 comprises means 9 for the translational motion of the detection means 7 with respect to the advancement surface 3, which are adapted to align the second collimator 8 at each of the scattered beams R generated by the scattering on the sampling points (Po to $P_N$).

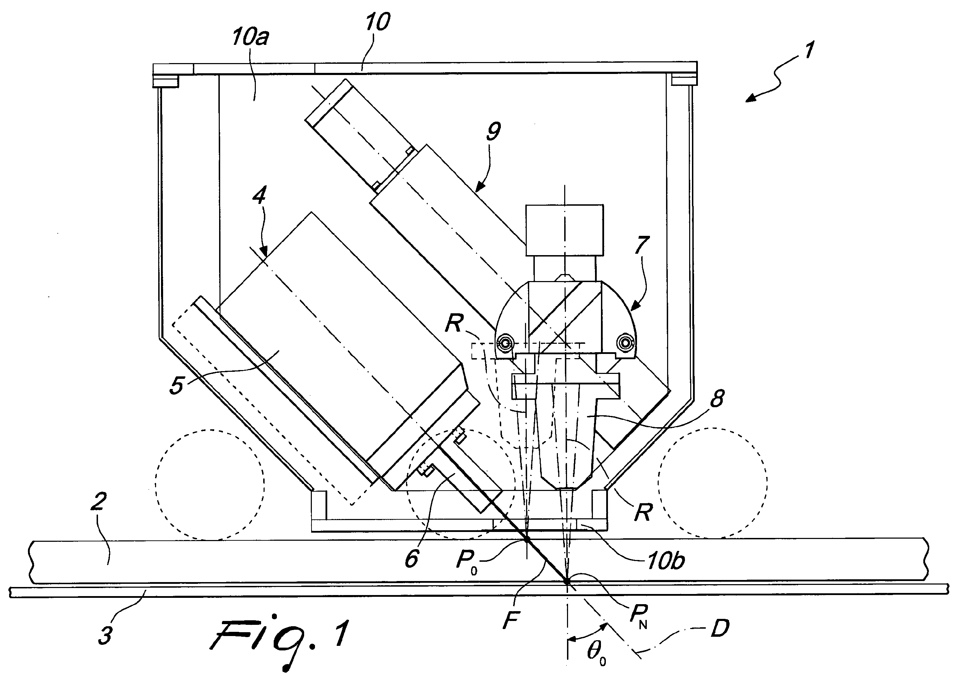

In particular, the scattered beam R generated at each of the sampling points Po to $P_N$ is substantially perpendicular to the advancement plane 3 and forms with the reference beam F an angle of $\pi/4$ rad, designated in Figure 1 by the reference symbol $\theta_0$.

However, different arrangements of the emission tube 5 and of the detection means 7, with a different breadth of the angle $\theta_0$, are not excluded.

The means 9 for translational motion are constituted by an actuator of the linear type, such as a step motor, and the direction of translational motion of the detection means 7 is substantially parallel to the direction D of the reference beam F.

Advantageously, there can be means for turning the emission means 4 and the detection means 7 around the advancement surface 3, which are not shown in the figures cited above for the sake of greater simplicity in illustration and are adapted to allow different angles of incidence of the reference beam F and of the scattered beam R with respect to the manufactured article 2.

Conveniently, the apparatus 1 comprises a frame 10 for supporting the emission and detection means 4 and 7.

In particular, the frame comprises a compartment 10a for accommodating the emission and detection means 4 and 7. The emission tube 5 is fixed to an internal surface of the compartment 10a and the detection means 7 are associated with the frame 10, inside the compartment 10a, by interposing the linear actuator 9. The frame 10 is further provided with an opening 10b for the passage of the reference beam F and of the scattered beam R.

Conveniently, means for cooling the emission means 4 and the detection means 7, of the commonly used air- or oil-based type, are associated with the frame 10.

In the embodiment shown in Figure 1, the emission means 4 and the detection means 7 are arranged above the advancement surface 3; however, alternative embodiments of the apparatus 1 are not excluded in which said means are arranged below the advancement surface 3.

Conveniently, the emission means 4 and the detection means 7 mutually cooperate and are functionally associated with a processing unit, such as a microprocessor system, which is adapted to determine the density of the panel 2 at each of the sampling points $P_0$ to $P_N$ starting from the intensity of the respective detected scattered beam R. The processing unit is not shown in the figures cited above for the sake of greater simplicity in illustration.

Means for interfacing with an operator are functionally associated with the processing unit and comprise means, such as a monitor or the like, for displaying the calculated density profile of the panel 2.

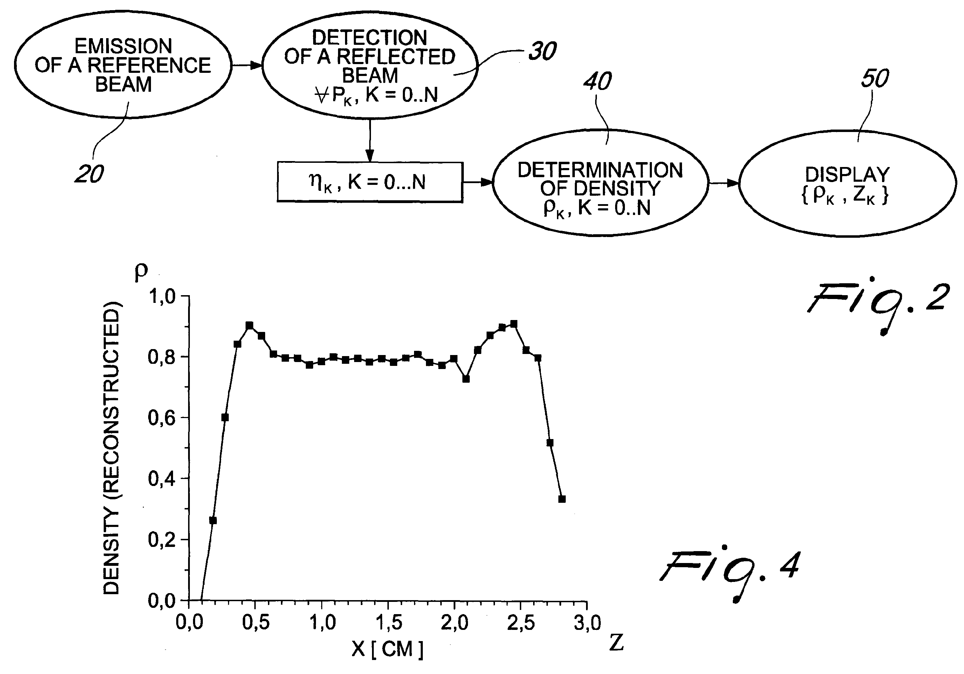

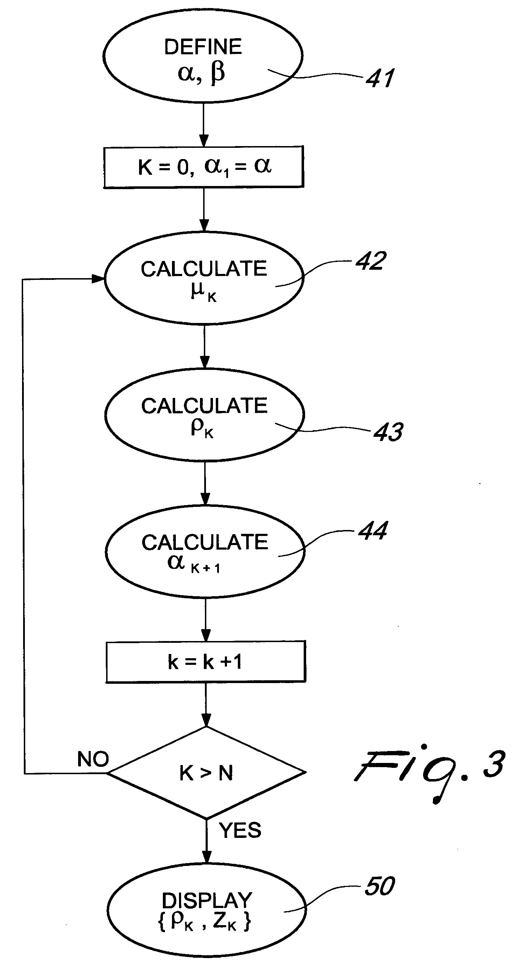

The method according to the invention, shown schematically in Figures 2 and 3, comprises a first step 20, in which a reference beam F of electromagnetic waves of known intensity, preferably X-rays, adapted to strike the manufactured article 2, such as a panel made of wood or the like, is emitted from an emission position located at a surface for the advancement of the manufactured article 2.

The reference beam F passes through the manufactured article 2 at a plurality of sampling points $P_K$ (with K=0...N) which are defined at specific depths $Z_k$ along the thickness of said manufactured article.

In particular, the reference beam F comprises a plurality of X-rays which are substantially transverse with respect to an advancement direction of the manufactured article 2.

The next step 30 entails detecting the intensity $n_K$ (with K=0...N) of a scattered beam R of electromagnetic waves generated by the scattering of the reference beam F at each of the points $P_K$.

Advantageously, detection occurs substantially on the same side of said emission position with respect to the advancement surface.

In particular, the scattered beam R comprises a plurality of X-rays which are substantially perpendicular to the advancement direction of the manufactured article 2, and the breadth of the smaller angle formed between the direction D of the reference beam F and the direction of the scattered beam R is substantially equal to $\pi/4$ rad.

Step 40 determines the density $\rho_K$ of the manufactured article at each of the sampling points $P_K$ (with K=0...N) starting from the respective measured intensities $n_K$.

With particular reference to a preferred but non-limiting embodiment, and as shown in the diagram of Figure 3, step 40 for determining the density $\rho_K$ compris-

es a first step 41 for defining a first constant $\alpha$, which is proportional to external factors such as any divergence of the reference beam F or the imperfect collimation of the detected scattered beam R, and a second constant $\beta$, which is proportional to the specific technical characteristics of the manufactured article 2, such as the attenuation coefficient of the material of which it is made.

This definition is performed by considering a measurement of intensity $n_K$ on a portion $\Delta x$ of a reference manufactured article having uniform density $\rho$ and having technical characteristics which are similar to those of the manufactured article 2, and by considering that:

$$\alpha = (\exp(A/\rho);$$

$$\beta = ((-B\Delta x)/\rho);$$

where

$$\ln(n_k) = \ln(\alpha\rho) + (-\beta\rho/\Delta x)x_k = A + Bx_k$$

The subsequent step 42 calculate $u_k = (1-(1-4n_k(\beta/\alpha_k))^{1/2})$, where k = 0, $n_k$ is the intensity measured at the depth $z_k$ on the manufactured article 2, and $\alpha_k = \alpha$. In particular, the constant $\alpha$, as calculated in step 41 for a reference manufactured article, is associated here with a point Po at the depth $Z_0$ of the manufactured article 2.

The density $\rho_0$ is calculated in step 43 by considering that $\rho_k = u_k/\beta$.

The next step 44 entails calculating $\alpha_{k+1} = \alpha_k \exp(-u_k)$.

The steps 42, 43 and 44 are subsequently repeated iteratively for every k from 1 to N in order to determine a complete density profile of the manufactured article 2.

Finally, step 50 displays the density profile of the manufactured article 2, as shown by way of example in Figure 4. In particular, for each point $P_k$ the density value $\rho_k$ related to the corresponding depth $Z_k$ of the scattering of the scattered beam R is represented. Subsequent approximations allow to linearize the resulting chart, for a continuous representation of the density profile of the manufactured article 2.

In practice it has been found that the described invention achieves the proposed aim and objects, and in particular the fact is stressed that the arrangement of the emission means and of the detection means proximate to the same side of the panel to be measured allows to provide an apparatus which is considerably simpler, cheaper, and easier to use and maintain.

This arrangement, combined with the presence of a single frame for supporting and accommodating such means, in fact allows simpler alignment between the first and second collimator, limiting considerably the complexity of actions such as operations for calibrating and maintaining the apparatus.

Further, it should be noted that the greater compactness of the invention with respect to known apparatuses and the absence of separate motorized means for moving the emission and detection means ensure a significant reduction of the possibilities of an error in measuring the density as a consequence of mechanical defects or synchronization errors.

Further, this allows the presence of a single cooling unit, with a further reduction of the general production and maintenance costs of the apparatus.

Moreover, the possibility to damage the apparatus is reduced by the possibility to install it below a line for feeding the panels or manufactured articles in general, far from any noxious gases generated during the production process.

Another advantage of the invention is that it ensures correct measurement of the density of the manufactured article, due to the presence of a scattered beam of electromagnetic waves whose intensity is generally higher than that of an attenuated beam of electromagnetic waves measured by means of known types of apparatus.

Greater precision of measurement, with specific reference to the density measurement on manufactured articles of relatively low thickness, is further ensured by the presence of the means for turning the emission means and detection means, by way of which it is possible to obtain different angles of incidence of the reference beam and of the scattered beam with respect to the manufactured article.

An angle of incidence on the order of $\pi/6$, for example, in fact allows, with respect to a perpendicular arrangement, an increase in the useful measured thickness of the manufactured article and accordingly an increase in the number of sampling points distributed transversely along said thickness, ensuring higher precision of the density measurement.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

The disclosures in Italian Patent Application No. MO2005A000341 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (1) for measuring the density of manufactured articles, particularly panels (2) made of pressed loose material, comprising:

   - means (4) for emitting at least one reference beam (F) of electromagnetic waves of known intensity formed along a direction (D), said emitting means (4) being suitable to be arranged at an advancement surface (3) of at least one manufactured article;
   - means (7) for detecting the intensity of at least one scattered beam (R) of electromagnetic waves, generated by the scattering of said reference beam (F) at at least one sampling point (Pk) of said manufactured article, said detection means (7) being suitable to be arranged facing the same side of said advancement surface (3) with respect to said emission means (4);
   - a processing unit which is functionally associated with said detection means (7) and is adapted to determine the density of said manufactured article at said sampling point starting from the intensity of said scattered beam (R), **characterized in that** said processing unit is functionally associated with said emission means (4), and **in that** it further comprises means (9) for the translational motion of said detection means (7) with respect to said emitting means (4) parallel to said direction (D) of said reference beam (F) for detecting the intensity of said scattered beam (R) at each of said sampling points (Pk), and at least one frame (10) for supporting said emission means (4) and said detection means (7).

2. The apparatus (1) according to claim 1, **characterized in that** said reference beam (F) is substantially transverse with respect to said advancement surface (3) and passes through said manufactured article at a plurality of said sampling points defined at distinct depths along the thickness of said manufactured article.

3. The apparatus (1) according to one or more of the preceding claims, **characterized in that** said translational motion means (9) comprise at least one linear actuator.

4. The apparatus (1) according to one claim 3, **characterized in that** said linear actuator comprises a step motor.

5. The apparatus (1) according to one or more of the preceding claims, **characterized in that** said scattered beam (R) is substantially perpendicular with respect to said advancement surface (3).

6. The apparatus (1) according to one or more of the preceding claims, **characterized in that** the breadth of the smaller angle formed between the direction of said reference beam (F) and the direction of said scattered beam (R) is substantially equal to $\pi/4$ rad.

7. The apparatus (1) according to one or more of the preceding claims, **characterized in that** said processing unit is adapted to determine the density of said manufactured article at each of said sampling points.

8. The apparatus (1) according to one or more of the preceding claims, **characterized in that** said emission means (4) comprise at least one tube (5) for emitting a stream of X-rays.

9. The apparatus (1) according to one or more of the preceding claims, **characterized in that** said emission means (4) comprise at least one first device for collimating said emitted stream of X-rays.

10. The apparatus (1) according to one or more of the preceding claims, **characterized in that** said detection means (7) comprise at least one diode.

11. The apparatus (1) according to one or more of the preceding claims, **characterized in that** said detection means (7) comprise at least one second device for collimating said scattered beam (R).

12. The apparatus (1) according to one or more of the preceding claims, **characterized in that** it comprises means for rotating said emission means (4) and said detection means (7) with respect to said advancement surface (3) which are adapted to vary the angle of incidence of said reference beam (F) and of said scattered beam (R) with respect to the plane of arrangement of said manufactured article.

13. The apparatus (1) according to one or more of the preceding claims, **characterized in that** it comprises cooling means which are associated with at least one among said emission means (4) and said detection means (7).

14. The apparatus (1) according to one or more of the preceding claims, **characterized in that** said cooling means are of the air-based type or the like.

15. The apparatus (1) according to one or more of the preceding claims, **characterized in that** said cooling means are of the oil-base type or the like.

16. The apparatus (1) according to one or more of the preceding claims, **characterized in that** it comprises means for interfacing with an operator which are functionally associated with said processing unit

17. The apparatus (1) according to one or more of the preceding claims, **characterized in that** said interface means comprise means for displaying the density profile of said manufactured article at said sampling points.

18. The apparatus (1) according to one or more of the preceding claims, **characterized in that** said processing unit is a microprocessor system.

19. The apparatus (1) according to one or more of the preceding claims, **characterized in that** said advancement surface (3) is constituted by a conveyor of the motorized type.

20. The apparatus (1) according to one or more of the preceding claims, **characterized in that** said advancement surface (3) is constituted by a sliding surface (3).

21. A method for measuring the density of manufactured articles, particularly panels (2) made of pressed loose material, comprising the steps of:

    a) emitting, from an emission position located at an advancement surface (3) of at least one manufactured article, at least one reference beam (F) of electromagnetic waves of known intensity that is formed along a direction (D) toward said at least one manufactured article;
    b) detecting, on the same side as said emission position with respect to said advancement surface (3), the intensity of a scattered beam (R) of electromagnetic waves generated by the scattering of said reference beam (F) at at least one sampling point (Pk) located on said manufactured article, said detecting step being carried out by means (7) for detecting the scattered beam (R);
    c) determining the density of said manufactured article at said sampling point starting from the intensity of said scattered beam (R);

    **characterized in that** said it further comprises the step for

    d) moving said detection means (7) translationally with respect to said emitting means (4) parallel to said direction (D) of said reference beam (F) for detecting the intensity of said scattered beam (R) at each of said sampling points (Pk).

22. The method according to claim 21, **characterized**

**in that** it comprises the iterative repetition of steps b) and c), for a plurality of said sampling points (Pk) defined at distinct depths, along the thickness of said manufactured article, and for determining the density of said manufactured article at each of said sampling points.

23. The method according to claims 22 and 23, **characterized in that** said reference beam (F) is substantially transverse with respect to an advancement direction of said manufactured article.

24. The method according to one or more of claims 23 to 25, **characterized in that** said reference beam (F) comprises a plurality of X-rays.

25. The method according to one or more of claims 21 to 24, **characterized in that** said scattered beam (R) comprises a plurality of X-rays.

26. The method according to one or more of claims 21 to 25, **characterized in that** the breadth of the smaller angle formed between the direction of said reference beam (F) and the direction of said scattered beam (R) is substantially equal to $\pi/4$ rad.

27. The method according to one or more of claims 21 to 26, **characterized in that** it comprises displaying the density profile of said manufactured article at said sampling points.

**Patentansprüche**

1. Eine Vorrichtung (1) zur Messung der Dichte von hergestellten Artikeln, insbesondere Platten (2) aus gepresstem losem Material, die Folgendes umfasst:

   - Mittel (4) zum Emittieren mindestens eines Referenzstrahls (F) elektromagnetischer Wellen mit bekannter Intensität, geformt entlang einer Richtung (D), wobei die Emissionsmittel (4) geeignet sind, an einer Vorwärtsbewegungsoberfläche (3) mindestens eines hergestellten Artikels angeordnet zu werden;
   - Mittel (7) zur Erfassung der Intensität mindestens eines gestreuten Strahls (R) elektromagnetischer Wellen, erzeugt durch die Streuung des Referenzstrahls (F) an mindestens einem Abtastpunkt (Pk) des hergestellten Artikels, wobei die Erfassungsmittel (7) geeignet sind, derselben Seite der Vorwärtsbewegungsoberfläche (3) mit Bezug auf die Emissionsmittel (4) zugewandt angeordnet zu werden;
   - eine Verarbeitungseinheit, die funktionell mit den Erfassungsmitteln (7) verbunden und ausgebildet ist, um die Dichte des hergestellten Artikels an dem Abtastpunkt ausgehend von der Intensität des gestreuten Strahls (R) zu bestimmen, **dadurch gekennzeichnet, dass** die Verarbeitungseinheit funktionell mit den Emissionmitteln (4) verbunden ist, und dadurch, dass sie weiter Mittel (9) für die Translationsbewegung der Erfassungsmittel (7) mit Bezug auf die Emissionmittel (4) parallel zu der Richtung (D) des Referenzstrahls (F) umfasst, um die Intensität des gestreuten Strahls (R) an jedem der Abtastpunkte (Pk) zu erfassen, und mindestens einen Rahmen (10) zum Tragen der Emissionmittel (4) und der Erfassungsmittel (7).

2. Die Vorrichtung (1) gemäß Anspruch 1, **dadurch gekennzeichnet, dass** der Referenzstrahl (F) im Wesentlichen transversal zur Vorwärtsbewegungsoberfläche (3) ist und durch den hergestellten Artikel an einer Vielzahl der Abtastpunkte dringt, die in bestimmten Tiefen entlang der Dicke des hergestellten Artikels definiert sind.

3. Die Vorrichtung (1) gemäß einem oder mehreren der obigen Ansprüche, **dadurch gekennzeichnet, dass** die Translationsbewegungsmittel (9) mindestens ein lineares Antriebselement umfassen.

4. Die Vorrichtung (1) gemäß einem Anspruch 3, **dadurch gekennzeichnet, dass** das lineare Antriebselement einen Schrittmotor umfasst.

5. Die Vorrichtung (1) gemäß einem oder mehreren der obigen Ansprüche, **dadurch gekennzeichnet, dass** der gestreute Strahl (R) im Wesentlichen senkrecht zu der Vorwärtsbewegungsoberfläche (3) ist.

6. Die Vorrichtung (1) gemäß einem oder mehreren der obigen Ansprüche, **dadurch gekennzeichnet, dass** die Breite des kleineren Winkels, der zwischen der Richtung des Referenzstrahls (F) und der Richtung des gestreuten Strahls (R) gebildet ist, im Wesentlichen gleich $\pi/4$ rad ist.

7. Die Vorrichtung (1) gemäß einem oder mehreren der obigen Ansprüche, **dadurch gekennzeichnet, dass** die Verarbeitungseinheit ausgebildet ist, um die Dichte des hergestellten Artikels an jedem der Abtastpunkte zu bestimmen.

8. Die Vorrichtung (1) gemäß einem oder mehreren der obigen Ansprüche, **dadurch gekennzeichnet, dass** die Emissionmittel (4) mindestens eine Röhre (5) zur Emission eines Stroms von Röntgenstrahlen umfassen.

9. Die Vorrichtung (1) gemäß einem oder mehreren der obigen Ansprüche, **dadurch gekennzeichnet, dass** die Emissionsmittel (4) mindestens eine erste Vorrichtung zum Kollimieren des emittierten Stroms von Röntgenstrahlen umfassen.

10. Die Vorrichtung (1) gemäß einem oder mehreren der obigen Ansprüche, **dadurch gekennzeichnet, dass** die Erfassungsmittel (7) mindestens eine Diode umfassen.

11. Die Vorrichtung (1) gemäß einem oder mehreren der obigen Ansprüche, **dadurch gekennzeichnet, dass** die Erfassungsmittel (7) mindestens eine zweite Vorrichtung zum Kollimieren des gestreuten Strahls (R) umfassen.

12. Die Vorrichtung (1) gemäß einem oder mehreren der obigen Ansprüche, **dadurch gekennzeichnet, dass** sie Mittel umfasst, um die Emissionsmittel (4) und die Erfassungsmittel (7) im Verhältnis zu der Vorwärtsbewegungsoberfläche (3) zu drehen, welche ausgebildet sind, um den Einfallswinkel des Referenzstrahls (F) und des gestreuten Strahls (R) mit Bezug auf die Ebene der Anordnung des hergestellten Artikels zu variieren.

13. Die Vorrichtung (1) gemäß einem oder mehreren der obigen Ansprüche, **dadurch gekennzeichnet, dass** sie Kühlungsmittel umfasst, die mit den Emissionsmitteln (4) und/oder den Erfassungsmitteln (7) verbunden sind.

14. Die Vorrichtung (1) gemäß einem oder mehreren der obigen Ansprüche, **dadurch gekennzeichnet, dass** die Kühlungsmittel vom Typ auf Luftbasis oder dergleichen sind.

15. Die Vorrichtung (1) gemäß einem oder mehreren der obigen Ansprüche, **dadurch gekennzeichnet, dass** die Kühlungsmittel vom Typ auf Ölbasis oder dergleichen sind.

16. Die Vorrichtung (1) gemäß einem oder mehreren der obigen Ansprüche, **dadurch gekennzeichnet, dass** sie Mittel zur Verbindung mit einem Bediener umfasst, die funktionell mit der Verarbeitungseinheit verbunden sind.

17. Die Vorrichtung (1) gemäß einem oder mehreren der obigen Ansprüche, **dadurch gekennzeichnet, dass** die Verbindungsmittel Mittel umfassen, um das Dichteprofil des hergestellten Artikels an den Abtastpunkten anzuzeigen.

18. Die Vorrichtung (1) gemäß einem oder mehreren der obigen Ansprüche, **dadurch gekennzeichnet, dass** die Verarbeitungseinheit ein Mikroprozessorsystem ist.

19. Die Vorrichtung (1) gemäß einem oder mehreren der obigen Ansprüche, **dadurch gekennzeichnet,**

**dass** die Vorwärtsbewegungsoberfläche (3) aus einem Förderer vom motorisierten Typ besteht.

20. Die Vorrichtung (1) gemäß einem oder mehreren der obigen Ansprüche, **dadurch gekennzeichnet, dass** die Vorwärtsbewegungsoberfläche (3) aus einer gleitenden Oberfläche (3) besteht.

21. Ein Verfahren zur Messung der Dichte von hergestellten Artikeln, insbesondere Platten (2) aus gepresstem, losem Material, das folgende Schritte umfasst:

a) Emittieren, von einer Emissionsposition, die sich an einer Vorwärtsbewegungsoberfläche (3) mindestens eines hergestellten Artikels befindet, mindestens eines Referenzstrahls (F) elektromagnetischer Wellen mit bekannter Intensität, der entlang einer Richtung (D) geformt ist, zu dem mindestens einen hergestellten Artikel hin;
b) Erfassen, auf derselben Seite wie die Emissionposition mit Bezug auf die Vorwärtsbewegungsoberfläche (3), der Intensität eines gestreuten Strahls (R) elektromagnetischer Wellen, der erzeugt wird durch die Streuung des Referenzstrahls (F) an mindestens einem Abtastpunkt (Pk), der sich auf dem hergestellten Artikel befindet, wobei der Erfassungsschritt von Mitteln (7) zur Erfassung des gestreuten Strahls (R) durchgeführt wird;
c) Bestimmen der Dichte des hergestellten Artikels an dem Abtastpunkt ausgehend von der Intensität des gestreuten Strahls (R);

**dadurch gekennzeichnet, dass** es weiter den Schritt umfasst, um d) die Erfassungsmittel (7) in Translationsrichtung mit Bezug auf die Emissionsmittel (4) parallel zur Richtung (D) des Referenzstrahls (F) zu bewegen, um die Intensität des gestreuten Strahls (R) an jedem der Abtastpunkte (Pk) zu erfassen.

22. Das Verfahren gemäß Anspruch 21, **dadurch gekennzeichnet, dass** es die iterative Wiederholung der Schritte b) und c) für eine Vielzahl der Abtastpunkte (Pk) umfasst, die in bestimmten Tiefen entlang der Dicke des hergestellten Artikels definiert sind, und um an jedem der Abtastpunkte die Dichte des hergestellten Artikels zu bestimmen.

23. Das Verfahren gemäß Anspruch 22 und 23, **dadurch gekennzeichnet, dass** der Referenzstrahl (F) im Wesentlichen transversal zu einer Vorwärtsbewegungsrichtung des hergestellten Artikels ist.

24. Das Verfahren gemäß einem oder mehreren der Ansprüche 23 bis 25, **dadurch gekennzeichnet, dass** der Referenzstrahl (F) eine Vielzahl von Röntgenstrahlen umfasst.

25. Das Verfahren gemäß einem oder mehreren der Ansprüche 21 bis 24, **dadurch gekennzeichnet, dass** der gestreute Strahl (R) eine Vielzahl von Röntgenstrahlen umfasst.

26. Das Verfahren gemäß einem oder mehreren der Ansprüche 21 bis 25, **dadurch gekennzeichnet, dass** die Breite des kleineren Winkels, der zwischen der Richtung des Referenzstrahls (F) und der Richtung des gestreuten Strahls (R) gebildet ist, im Wesentlichen gleich $\pi/4$ rad ist.

27. Das Verfahren gemäß einem oder mehreren der Ansprüche 21 bis 26, **dadurch gekennzeichnet, dass** es das Anzeigen des Dichteprofils des hergestellten Artikels an den Abtastpunkten umfasst.

## Revendications

1. Appareil de mesure de la densité d'articles fabriqués, en particulier des panneaux (2) de matériaux en vrac compressés, comprenant :

   - des moyens (4) d'émission d'au moins un faisceau de référence (F) d'ondes électromagnétiques d'une intensité connue formé dans une direction (D), lesdits moyens d'émission (4) étant conçus pour être agencés au niveau d'une surface de progression (3) d'au moins un article fabriqué ;
   - des moyens (7) de détection de l'intensité d'au moins un faisceau diffusé (R) d'ondes électromagnétiques, générées par la diffusion dudit faisceau de référence (F) au niveau d'au moins un point d'échantillonnage (Pk) dudit article fabriqué, lesdits moyens de détection (7) étant conçus pour être agencés en face du même côté de ladite surface de progression (3) par rapport aux dits moyens d'émission (4) ;
   - une unité centrale qui est associée, en fonctionnement, aux dits moyens de détection (7) et est conçue pour déterminer la densité dudit article fabriqué au niveau dudit point d'échantillonnage en commençant par l'intensité dudit faisceau diffusé (R),

   **caractérisé en ce que** ladite unité centrale est associée, en fonctionnement, aux dits moyens d'émission (4), et **en ce qu'**elle comprend, en outre, des moyens (9) de déplacement en translation desdits moyens de détection (7) par rapport aux dits moyens d'émission (4) parallèlement à ladite direction (D) dudit faisceau de référence (F) afin de détecter l'intensité dudit faisceau diffusé (R) au niveau de chacun desdits points d'échantillonnage (Pk), et au moins un bâti (10) pour supporter lesdits moyens d'émission (4) et lesdits moyens de détection (7).

2. Appareil (1) selon la revendication 1, **caractérisé en ce que** ledit faisceau de référence (F) est sensiblement transversal par rapport à ladite surface de progression (3) et traverse ledit article fabriqué au niveau d'une pluralité des dits points d'échantillonnage définis à des profondeurs distinctes dans l'épaisseur dudit article fabriqué.

3. Appareil (1) selon une ou plusieurs des revendications précédentes, **caractérisé en ce que** lesdits moyens de déplacement en translation (9) comprennent au moins un actionneur linéaire.

4. Appareil (1) selon la revendication 3, **caractérisé en ce que** ledit actionneur linéaire comprend un moteur pas-à-pas.

5. Appareil (1) selon une ou plusieurs des revendications précédentes, **caractérisé en ce que** ledit faisceau diffusé (R) est sensiblement perpendiculaire par rapport à ladite surface de progression (3).

6. Appareil (1) selon une ou plusieurs des revendications précédentes, **caractérisé en ce que** la largeur du plus petit angle formé entre la direction dudit faisceau de référence (F) et la direction dudit faisceau diffusé (R) est sensiblement égale à n/4 rad.

7. Appareil (1) selon une ou plusieurs des revendications précédentes, **caractérisé en ce que** ladite unité centrale est conçue pour déterminer la densité dudit article fabriqué au niveau de chacun desdits points d'échantillonnage.

8. Appareil (1) selon une ou plusieurs des revendications précédentes, **caractérisé en ce que** lesdits moyens d'émission (4) comprennent au moins un tube (5) émettant un flux de rayons X.

9. Appareil (1) selon une ou plusieurs des revendications précédentes, **caractérisé en ce que** lesdits moyens d'émission (4) comprennent au moins un premier dispositif de collimation dudit flux de rayons X émis.

10. Appareil (1) selon une ou plusieurs des revendications précédentes, **caractérisé en ce que** lesdits moyens de détection (7) comprennent au moins une diode.

11. Appareil (1) selon une ou plusieurs des revendications précédentes, **caractérisé en ce que** lesdits moyens de détection (7) comprennent au moins un second dispositif de collimation dudit faisceau diffusé (R).

**12.** Appareil (1) selon une ou plusieurs des revendications précédentes, **caractérisé en ce qu'**il comprend des moyens de mise en rotation desdits moyens d'émission (4) et desdits moyens de détection (7), par rapport à ladite surface de progression (3) qui sont conçus pour faire varier l'angle d'incidence dudit faisceau de référence (F) et dudit faisceau diffusé (R) par rapport au plan d'agencement dudit article fabriqué.

**13.** Appareil (1) selon une ou plusieurs des revendications précédentes, **caractérisé en ce qu'**il comprend des moyens de refroidissement qui sont associés à au moins l'un parmi lesdits moyens d'émission (4) et lesdits moyens de détection (7).

**14.** Appareil (1) selon une ou plusieurs des revendications précédentes, **caractérisé en ce que** lesdits moyens de refroidissement sont du type à base d'air ou similaire.

**15.** Appareil (1) selon une ou plusieurs des revendications précédentes, **caractérisé en ce que** lesdits moyens de refroidissement sont du type à base d'huile ou similaire.

**16.** Appareil (1) selon une ou plusieurs des revendications précédentes, **caractérisé en ce qu'**il comprend des moyens d'interface avec un opérateur qui sont fonctionnellement associés à ladite unité centrale.

**17.** Appareil (1) selon une ou plusieurs des revendications précédentes, **caractérisé en ce que** lesdits moyens d'interface comprennent des moyens d'affichage du profil de densité dudit article fabriqué au niveau desdits points d'échantillonnage.

**18.** Appareil (1) selon une ou plusieurs des revendications précédentes, **caractérisé en ce que** ladite unité centrale est un système à microprocesseur.

**19.** Appareil (1) selon une ou plusieurs des revendications précédentes, **caractérisé en ce que** ladite surface de progression (3) est constituée d'un convoyeur du type motorisé.

**20.** Appareil (1) selon une ou plusieurs des revendications précédentes, **caractérisé en ce que** ladite surface de progression (3) est constituée d'une surface glissante (3).

**21.** Procédé de mesure de la densité d'articles fabriqués, plus particulièrement de panneaux (2) constitués de matériaux en vrac compressés, comprenant les étapes consistant à :

a) émettre, à partir d'une position d'émission située au niveau d'une surface de progression (3) d'au moins un article fabriqué, au moins un faisceau de référence (F) d'ondes électromagnétiques d'une intensité connue qui est formé dans une direction (D) orientée vers ledit au moins un article fabriqué ;

b) détecter, du côté de ladite position d'émission par rapport à ladite surface de progression (3), l'intensité d'un faisceau diffusé (R) d'ondes électromagnétiques générées par la diffusion dudit faisceau de référence (F) au niveau d'au moins un point d'échantillonnage (Pk) situé sur ledit article fabriqué, ladite étape de détection étant exécutée par des moyens (7) de détection du faisceau diffusé (R) ;

c) déterminer la densité dudit article fabriqué au niveau dudit point d'échantillonnage, en commençant par l'intensité dudit faisceau diffusé (R) ;

**caractérisé en ce qu'**il comprend en outre l'étape consistant à :

d) déplacer lesdits moyens de détection (7) par translation par rapport aux dits moyens d'émission (4) parallèlement à ladite direction (D) dudit faisceau de référence (F) afin de détecter l'intensité dudit faisceau diffusé (R) au niveau de chacun desdits points d'échantillonnage (Pk).

**22.** Procédé selon la revendication 21, **caractérisé en ce qu'**il comprend la répétition itérative des étapes b) et c), pour une pluralité desdits points d'échantillonnage (Pk) définis à des profondeurs distinctes, dans l'épaisseur dudit article fabriqué, et permettant de déterminer la densité dudit article fabriqué au niveau de chacun desdits points d'échantillonnage.

**23.** Procédé selon les revendications 21 et 22, **caractérisé en ce que** ledit faisceau de référence (F) est sensiblement transversal par rapport à un sens de progression dudit article fabriqué.

**24.** Procédé selon une ou plusieurs des revendications 21 à 23, caractérisé en ce ledit faisceau de référence (F) comprend une pluralité de rayons X.

**25.** Procédé selon une ou plusieurs des revendications 21 à 24, **caractérisé en ce que** ledit faisceau diffusé (R) comprend une pluralité de rayons X.

**26.** Procédé selon une ou plusieurs des revendications 21 à 25, **caractérisé en ce que** la largeur du plus petit angle formé entre la direction dudit faisceau de référence (F) et la direction dudit faisceau diffusé (R) est sensiblement égale à n/4 rad.

**27.** Procédé selon une ou plusieurs des revendications 21 à 26, **caractérisé en ce qu'**il comprend l'affichage du profil de densité dudit article fabriqué au niveau desdits points d'échantillonnage.

Fig.1

Fig.2

EP 1 801 571 B1

Fig.4

DEFINE
α, β — *41*

K = 0, α₁ = α

CALCULATE
μₖ — *42*

CALCULATE
ρₖ — *43*

CALCULATE
αₖ₊₁ — *44*

k = k +1

K > N

NO

YES

DISPLAY
{ρₖ , Zₖ} — *50*

*Fig. 3*

**EP 1 801 571 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4315988 A1
- US 4918712 A1
- US 5729582 A1
- IT MO20050341 A